(19) Europäisches Patentamt
European Patent Office
Office européen des brevets

(11) **EP 2 904 579 B1**

(12) **FASCICULE DE BREVET EUROPEEN**

(45) Date de publication et mention
de la délivrance du brevet:
**27.02.2019 Bulletin 2019/09**

(21) Numéro de dépôt: **13773252.5**

(22) Date de dépôt: **04.10.2013**

(51) Int Cl.:
***H04L 9/32*** *(2006.01)*

(86) Numéro de dépôt international:
**PCT/EP2013/070727**

(87) Numéro de publication internationale:
**WO 2014/053641 (10.04.2014 Gazette 2014/15)**

(54) **INCRUSTATION D'UN FILIGRANE NUMÉRIQUE DANS UN SIGNAL**

EINBETTUNG EINES DIGITALEN WASSERZEICHENS IN EINEM SIGNAL

EMBEDDING A DIGITAL WATERMARK IN A SIGNAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.10.2012 FR 1259445**

(43) Date de publication de la demande:
**12.08.2015 Bulletin 2015/33**

(73) Titulaire: **Safran Electronics & Defense
92100 Boulogne-Billancourt (FR)**

(72) Inventeur: **CHIODINI, Alain
F-92100 Boulogne-Billancourt (FR)**

(74) Mandataire: **Regimbeau
87 rue de Sèze
69477 Lyon Cedex 06 (FR)**

(56) Documents cités:
**US-A1- 2003 086 585     US-A1- 2006 204 030**

• **Proakis, John G.: "Digital Communications",
2000, Mc Graw-Hill, USA, XP002696664, page 158
- page 178**

EP 2 904 579 B1

**Description**

DOMAINE TECHNIQUE GENERAL ET CONTEXTE DE L'INVENTION

La présente invention se rapporte au domaine de la transmission de signal, dans le cadre de systèmes de communication radio fixes ou mobiles. Plus précisément, la présente invention traite de l'authentification du signal.

Dans ces systèmes, les messages échangés entre deux stations appartenant au même réseau sont généralement chiffrés afin d'assurer la confidentialité de leur contenu. Cependant, certains réseaux particulièrement sensibles peuvent être l'objet d'attaques malveillantes visant à déterminer la clef de chiffrement utilisée pour chiffrer les messages transmis et/ou à faire passer l'attaquant pour un membre du réseau afin d'infiltrer ce dernier ou, du moins, de perturber significativement le fonctionnement du système de communication en tant que tel.

Il apparaît donc nécessaire d'ajouter une couche de protection supplémentaire afin de garantir l'authenticité et/ou la paternité des messages transmis. Une technique employée consiste à dissimuler une marque dans un signal ou un message, dont la présence authentifie le signal ou message. Les méthodes permettant de dissimuler une marque dans un signal sont nombreuses. Elles opèrent dans les domaines temporel et/ou fréquentiel. Elles consistent typiquement à ajouter un signal ayant un caractère pseudo-aléatoire au signal modulé. Il s'agit de méthodes que nous pourrions qualifier de "positives" car, d'une façon ou d'une autre, un motif est effectivement présent, bien que dissimulé, dans le signal.

Par exemple, la demande de brevet US 2003/086585 décrit de façon classique l'introduction de filigranes dans un média, par exemple un fichier audio, vidéo ou une photographie, par l'addition des filigranes aux données du fichier.

Cependant, de telles méthodes ne donnent pas entièrement satisfaction. En effet, la présence de la marque peut être détectée dans le signal transmis puisqu'elle y est présente, pour ainsi dire de façon "positive". L'attaquant du réseau de communication peut ainsi tenter de mettre en évidence et de contrefaire cette marque.

PRESENTATION DE L'INVENTION

L'invention vise à permettre d'authentifier un signal lors d'une transmission, au moyen d'un procédé offrant une sécurité accrue par rapport aux procédés de l'état de la technique, une simplicité de mise en oeuvre ne nécessitant pas une forte puissance de calcul, et une altération restreinte du signal.

L'invention concerne un procédé de transmission d'un signal numérique, dans lequel

- lors de l'émission, un vecteur correspondant à un signal numérique à transmettre prenant la forme d'une séquence de N symboles est projeté sur un espace vectoriel, ledit espace vectoriel étant orthogonal à au moins un vecteur non nul correspondant à une séquence de symboles définissant un filigrane numérique, et

- lors de la réception, le signal numérique est authentifié en vérifiant l'orthogonalité d'un vecteur, correspondant audit signal numérique reçu et prenant la forme d'une séquence de symboles, par rapport audit au moins un vecteur définissant le filigrane numérique.

L'invention propose à cet effet selon un premier aspect un procédé d'émission d'un signal numérique, dans lequel un système électronique d'émission met en oeuvre les étapes selon lesquelles:

- un vecteur $\vec{s}$ correspondant à un signal numérique à transmettre prenant la forme d'une séquence de N symboles est projeté sur un espace vectoriel, ledit espace vectoriel étant orthogonal à au moins un vecteur $\vec{q}$ non nul correspondant à une séquence de symboles définissant un filigrane numérique,

- le signal numérique résultant de la projection est émis.

L'invention selon le premier aspect est avantageusement complétée par les différentes caractéristiques suivantes prises seules ou selon leurs différentes combinaisons possibles :

- le procédé comprend en outre une étape selon laquelle, préalablement à sa transmission, le signal numérique résultant de la projection est normalisé de sorte que le produit scalaire hermitien du vecteur $\vec{s}$ correspondant au signal à transmettre avec le vecteur $\vec{r}_{TX}$ correspondant au signal numérique transmis soit égal à N;

- la séquence de symboles définissant ledit au moins un filigrane numérique résulte d'une transformation de symboles du signal numérique à transmettre,

- le vecteur $\vec{s}$ correspondant à un signal numérique à transmettre prenant la forme d'une séquence de N symboles est projeté sur un espace vectoriel, ledit espace vectoriel étant orthogonal à une pluralité de K vecteurs $\vec{q}_i$ non nul correspondants chacun à une séquence de symboles définissant un filigrane numérique;

- le signal résultant de la projection est déterminé comme étant la première colonne de l'inverse généralisée, dite pseudo-inverse de Penrose, de la matrice M de dimensions (K+1)×N suivante:

$$M = \begin{pmatrix} s(T) & s(2T) & \cdots & s(NT) \\ q_1(T) & q_1(2T) & & q_1(NT) \\ & \vdots & \ddots & \vdots \\ q_K(T) & q_K(2T) & \cdots & q_K(NT) \end{pmatrix}$$

avec T l'intervalle de temps séparant deux symboles consécutifs.

Selon un deuxième aspect, l'invention propose un procédé de réception d'un signal numérique, dans lequel un système électronique de réception authentifie un signal numérique reçu en vérifiant l'orthogonalité d'un vecteur $\vec{r}_{RX}$, correspondant audit signal numérique reçu et prenant la forme d'une séquence de symboles, par rapport à au moins un vecteur $\vec{q}$ non nul correspondant à une séquence de symboles définissant un filigrane numérique.

L'invention selon le deuxième aspect est avantageusement complétée par les différentes caractéristiques suivantes prises seules ou selon leurs différentes combinaisons possibles :

- pour vérifier l'orthogonalité, le système électronique de réception:

  - calcule une norme du produit scalaire hermitien entre ledit au moins un vecteur $\vec{q}$ définissant un filigrane numérique et le vecteur $\vec{r}_{RX}$ correspondant audit signal numérique reçu,
  - compare ladite norme avec un seuil de détermination,
  - détermine que le vecteur $\vec{r}_{RX}$ correspondant audit signal numérique reçu est orthogonal audit au moins un vecteur $\vec{q}$ définissant un filigrane numérique lorsque ladite norme est inférieure au seuil de détermination, et
  - détermine que le vecteur $\vec{r}_{RX}$ correspondant audit signal numérique reçu n'est pas orthogonal audit au moins un vecteur $\vec{q}$ définissant un filigrane numérique lorsque ladite norme est supérieure au seuil de détermination;

- le système électronique de réception authentifie un signal numérique reçu en vérifiant l'orthogonalité d'un vecteur $\vec{r}_{RX}$, correspondant audit signal numérique reçu et prenant la forme d'une séquence de symboles, par rapport à une pluralité K de vecteurs $\vec{q}_i$ non nul correspondants chacun à une séquence de symboles définissant un filigrane numérique;
- le procédé comprend une étape d'estimation du rapport signal-sur-bruit du signal numérique reçu par le système électronique de réception, ledit seuil de détermination étant fixé en fonction de ladite estimation;
- la séquence de symboles définissant ledit au moins un filigrane numérique résulte d'une transformation de symboles du signal numérique reçu.

L'invention selon un troisième aspect propose un système électronique d'émission comprenant un processeur, une mémoire et une chaîne d'émission, ledit système électronique d'émission étant configuré pour

- pour projeter un vecteur $\vec{s}$ correspondant à un signal numérique à transmettre prenant la forme d'une séquence de N symboles sur un espace vectoriel, ledit espace vectoriel étant orthogonal à au moins un vecteur $\vec{q}$ non nul correspondant à une séquence de symboles définissant un filigrane numérique,
- émettre le signal numérique résultant de la projection.

L'invention selon un quatrième aspect propose un système électronique de réception, comprenant un processeur, une mémoire et une chaîne d'acquisition, caractérisé en ce que le système électronique de réception est configuré pour vérifier l'orthogonalité d'un vecteur $\vec{r}_{RX}$ correspondant audit signal numérique reçu avec au moins un vecteur $\vec{q}$ non nul correspondant à une séquence de symboles définissant un filigrane numérique.

De préférence, pour vérifier l'orthogonalité, le système électronique de réception est configuré pour:

- calculer une norme du produit scalaire hermitien entre ledit au moins un vecteur $\vec{q}$ définissant un filigrane numérique et le vecteur $\vec{r}_{RX}$ correspondant audit signal numérique reçu,
- comparer ladite norme avec un seuil de détermination,
- déterminer que le vecteur $\vec{r}_{RX}$ correspondant audit signal numérique reçu est orthogonal audit au moins un vecteur $\vec{q}$ définissant un filigrane numérique lorsque ladite norme est inférieure au seuil de détermination, et
- déterminer que le vecteur $\vec{r}_{RX}$ correspondant audit signal numérique reçu n'est pas orthogonal audit au moins un vecteur $\vec{q}$ définissant un filigrane numérique lorsque ladite norme est supérieure au seuil de détermination.

L'invention concerne également un produit programme d'ordinateur comprenant des instructions de code de programme pour l'exécution des étapes du procédé selon le premier ou le deuxième aspect de l'invention, lorsque ledit programme est exécuté par un processeur. De préférence, ledit produit programme d'ordinateur est un support de stockage, par exemple une mémoire, lisible par un ordinateur.

L'invention permet de dissimuler un filigrane numérique dans un signal numérique d'une façon négative, ou en creux, c'est-à-dire que l'on vérifie l'authenticité du message transmis au moyen de l'empreinte du filigrane numérique dans le signal numérique, plutôt que du filigrane numérique lui-même. L'opération de vérification de l'authenticité est aisée et peu complexe puisqu'elle se fait par exemple au moyen d'un simple produit scalaire. Plusieurs filigranes peuvent être incrustés dans le même signal modulé sans qu'ils interfèrent mutuellement. En outre, la distorsion subie par le signal modulé lors de l'incrustation du filigrane est relativement faible, bien qu'elle croisse cependant avec le nombre de filigranes incrustés.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels:

- la figure 1 est un schéma présentant un système de communication entre un système électronique d'émission et un système électronique de réception selon un mode de réalisation possible de l'invention;
- la figure 2 est un schéma illustrant des étapes de mise en oeuvre du procédé selon le premier aspect selon un mode de réalisation possible de l'invention;
- la figure 3 est un schéma illustrant des étapes de mise en oeuvre du procédé selon le deuxième aspect selon un mode de réalisation possible de l'invention.

DESCRIPTION DETAILLEE

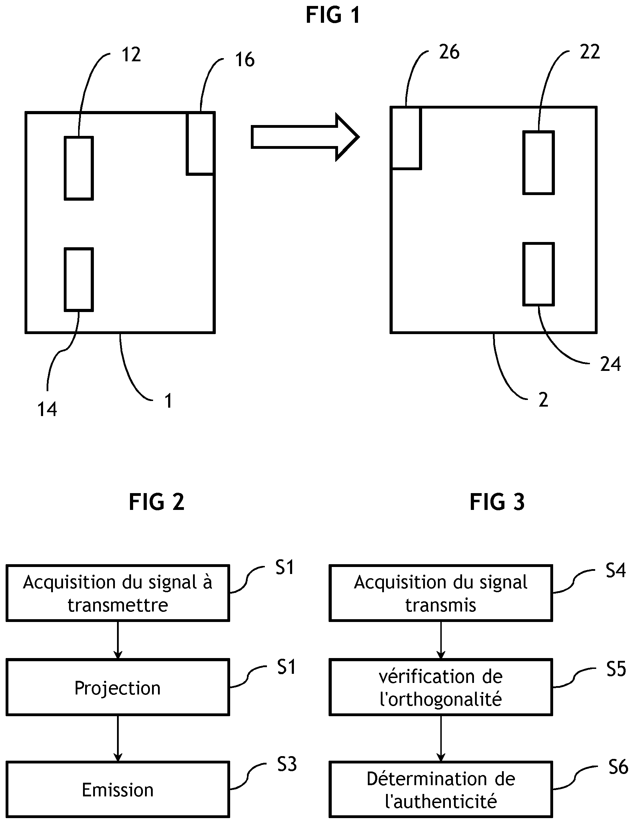

Le cadre de l'invention est celui de transmissions d'un signal numérique mises en oeuvre au moyen d'un système de communication entre un système électronique d'émission et un système électronique de réception. La figure 1 illustre un exemple d'un système de communication selon un mode de réalisation possible de l'invention.

Le système électronique d'émission 1 comprend un processeur 12, une mémoire 14 et une chaîne d'émission 16 d'un signal. Par exemple, le système électronique d'émission 1 est un émetteur radio, le processeur 12 est un DSP, de l'anglais Digital Signal Processor pour processeur de signal numérique, et la chaîne d'émission 16 d'un signal comprend un amplificateur et une antenne.

Le système électronique de réception 2 comprend un processeur 22, une mémoire 24 et une chaîne de réception 26 d'un signal. Par exemple, le système électronique de réception 2 est un récepteur radio, le processeur 22 est un DSP, et la chaîne de réception 26 d'un signal comprend un amplificateur et une antenne.

Les signaux numériques sont représentés par une suite de symboles complexes, et le traitement d'un signal numérique est illustré par l'application d'une matrice sur un vecteur constitué de grandeurs complexes représentant les symboles du signal numérique, lesdites grandeurs complexes étant ordonnées selon l'ordonnancement temporel des symboles complexes du signal numérique. On associe ainsi un vecteur à un signal numérique.

Nous allons considérer dans la suite à titre d'exemple non limitatif un système de communication radio basé sur la technique d'accès AMRT (Accès Multiple à Répartition dans le Temps; TDMA pour Time Division Multiple Access en anglais), comme par exemple les systèmes DECT (Digital Enhanced Cordless Télécommunications en anglais pour télécommunications sans fil numériques améliorées) et PHS (Personal Handy-phone System) qui sont des normes de téléphonie numérique sans fil principalement destinées aux particuliers et aux entreprises. L'invention peut encore être mise en oeuvre dans le cadre d'autres techniques d'accès, comme par exemple le mode AMRC (Accès Multiple à Répartition par Codes; CDMA en Anglais pour Code Division Multiple Access) ou le mode OFDM (Orthogonal Frequency-Division Multiplexing en anglais pour multiplexage par répartition orthogonale de la fréquence).

Dans un système AMRT, les messages numériques échangés sont encapsulés dans des paquets de données modulées au moyen d'un schéma de modulation donné, comme par exemple la modulation QPSK (acronyme de l'anglais Quadrature Phase Shift Keying pour modulation par déplacement de phase) issue du groupe des modulations linéaire. Ces paquets incluent généralement d'autres champs que celui contenant les données à transmettre, comme par exemple le champ de synchronisation qui permet au récepteur d'acquérir et de maintenir la synchronisation temporelle et fréquentielle avec l'émetteur.

Lors de la modulation, la séquence binaire associée à un paquet donné est convertie en une série de symboles (dont la taille varie typiquement entre 1 et 6 bits dans le cas d'un schéma de modulation linéaire du type QAM, acronyme de l'anglais Quadrature Amplitude Modulation pour modulation d'amplitude en quadrature), eux-mêmes associés à une amplitude et une phase particulières. La séquence de nombres complexes obtenue $s(nT)$ avec $n = 1...N$ est un signal numérique constituant le signal à transmettre.

Le système électronique d'émission 1 dispose d'au moins un filigrane numérique, par exemple sous forme d'une copie locale dans sa mémoire. Un filigrane numérique est un signal numérique, c'est-à-dire une séquence de nombres complexes consécutivement séparés par un intervalle de temps constant, constituant un code d'identification. Le filigrane est de préférence imperceptible et indétectable par tout système ignorant son utilisation.

Le système électronique d'émission 1 peut encore disposer d'un filigrane numérique sous une forme dérivée de celui-ci. Par exemple, il peut disposer de la matrice de projection orthogonale à un vecteur non nul correspondant à une séquence de symboles définissant un filigrane numérique. Un filigrane numérique peut encore être obtenu à partir d'une transformation du signal à transmettre, par exemple par une permutation de symboles.

Dans l'état de la technique, c'est lorsqu'il est présent dans un signal que le filigrane numérique garantit l'authenticité et/ou la paternité du message contenu dans le signal, par exemple un fichier texte ou audio, une image ou une vidéo. En revanche, dans le cadre de l'invention, le filigrane numérique n'est pas présent dans le signal, c'est uniquement son empreinte qui est présente dans le signal numérique et qui permet d'authentifier le signal.

A des fins de simplification, nous exposons le cas où le filigrane numérique est défini par une séquence de symboles q(nT), T représentant l'intervalle de temps séparant deux symboles consécutifs, et peut être représenté par un vecteur $\vec{q}$ non nul constitué de grandeurs complexes correspondant aux symboles du filigrane numérique, lesdites grandeurs complexes étant ordonnés selon l'ordonnancement temporel des symboles du filigrane numérique.

De préférence, le filigrane numérique est normalisé de sorte que le produit scalaire hermitien du vecteur $\vec{q}$ correspondant au filigrane numérique avec lui-même soit égal à l'unité :

$$\vec{q} \cdot \vec{q} = 1$$

En d'autres termes, en notant Q la matrice correspondant au vecteur $\vec{q}$, le produit de la matrice conjuguée transposée $Q^H$ du vecteur $\vec{q}$ avec la matrice Q du vecteur $\vec{q}$, est égal à l'unité :

$$Q^H \times Q = 1$$

Par la suite, le produit scalaire hermitien désigne une telle opération entre des matrices correspondant aux vecteurs intervenant dans ledit produit scalaire hermitien.

Ce produit scalaire hermitien est d'ailleurs parfois noté sous une forme explicitant son caractère hermitien :

$$\vec{q}^H \cdot \vec{q} = 1$$

En référence à la figure 2, le système électronique d'émission 1 acquiert (étape S1) le signal à transmettre, qui peut être transmis au système électronique d'émission 1 sous une forme numérique, ou bien directement acquis par le système électronique d'émission 1, par exemple au moyen d'un micro.

Le système électronique d'émission 1, plus précisément son processeur 12, projette ensuite (étape S2) le vecteur $\vec{s}$ correspondant au signal numérique à transmettre sur un espace vectoriel, ledit espace vectoriel étant orthogonal à au moins un vecteur $\vec{q}$ non nul correspondant à une séquence de symboles définissant un filigrane numérique.

En notant $\vec{r}_P$ le vecteur correspondant au signal numérique résultant de la projection, $I_N$ la matrice identité de dimensions $N \times N$, et $\vec{q}^H$ le vecteur transposé conjugué (ou hermitien) du vecteur $\vec{q}$, on obtient :

$$\vec{r}_P = (I_N - \vec{q}\vec{q}^H)\vec{s}$$

S'il s'agit d'incruster "négativement" un ensemble de K filigranes numériques, au moyen de vecteurs $\vec{q}_i$, i = 1...K, alors le vecteur $\vec{s}$ correspondant à un signal numérique à transmettre prenant la forme d'une séquence de N symboles est projeté sur un espace vectoriel, ledit espace vectoriel étant orthogonal à une pluralité de K vecteurs $\vec{q}'_i$ non nuls formant une base orthogonale, obtenus au moyen de l'algorithme de Gram-Schmidt à partir des vecteurs $\vec{q}_i$ non nuls correspondants chacun à une séquence de symboles définissant un filigrane numérique :

$$\vec{r}_P = \prod_{i=1}^{K}\left(I_N - \frac{\vec{q}'_i\vec{q}'^{H}_i}{\vec{q}'^{H}_i\vec{q}'_i}\right)\vec{s}$$

Le signal résultant de la projection peut être déterminé comme étant la première colonne de l'inverse généralisée, dite pseudo-inverse de Penrose, de la matrice M de dimensions $(K+1) \times N$ suivante :

$$M = \begin{pmatrix} s(T) & s(2T) & \cdots & s(NT) \\ q_1(T) & q_1(2T) & \cdots & q_1(NT) \\ \vdots & & \ddots & \vdots \\ q_K(T) & q_K(2T) & \cdots & q_K(NT) \end{pmatrix}$$

avec T l'intervalle de temps séparant deux symboles consécutifs.

Le signal numérique résultant de la projection $r_P$ est ensuite normalisé de sorte que le produit scalaire hermitien du vecteur $\vec{s}$ correspondant au signal à transmettre avec le vecteur $\vec{r}_{TX}$ correspondant au signal numérique transmis soit égal à N :

$$\vec{s} \cdot \overrightarrow{r_{TX}} = N$$

Le signal numérique transmis $r_{TX}(nT)$ est ensuite filtré afin d'obtenir le signal émis modulé en bande de base, qui est émis par le système électronique au moyen de sa chaîne d'émission 16 de signal (étape S3).

En référence à la figure 3, le système électronique de réception 2 acquiert (étape S4), au moyen de sa chaîne de réception 26, un signal correspondant au signal émis transmis par le système électronique d'émission 1. Le système électronique de réception 2 démodule le signal pour obtenir un signal numérique reçu $r_{RX}(nT)$.

Le système électronique de réception 2, ou plus précisément son processeur 22, authentifie le signal numérique reçu en vérifiant (étape S5) l'orthogonalité d'un vecteur $\vec{r}_{RX}$, correspondant audit signal numérique reçu et prenant la forme d'une séquence de symboles, par rapport audit au moins un vecteur $\vec{q}$ non nul correspondant à une séquence de symboles définissant le filigrane numérique.

Bien entendu, dans le cas où un ensemble de K filigranes numériques sont utilisés, le système électronique de réception authentifie un signal numérique reçu en vérifiant l'orthogonalité d'un vecteur $\vec{r}_{RX}$, correspondant audit signal numérique reçu et prenant la forme d'une séquence de symboles, par rapport à la pluralité K de vecteurs $\vec{q}_i$ non nul correspondants chacun à une séquence de symboles définissant un filigrane numérique.

Le ou les filigranes numériques correspondent à ceux utilisés par le système électronique de réception et répondent par conséquent aux mêmes définitions et exigences. Ainsi, le ou les filigranes numériques peuvent être stockés sous forme de copies locales dans la mémoire 24 du système électronique de réception 2, ou encore la séquence de symboles définissant ledit au moins un filigrane numérique peut résulter d'une transformation de symboles du signal numérique reçu.

Pour vérifier l'orthogonalité, le système électronique de réception 2 calcule une norme du produit scalaire hermitien entre ledit au moins un vecteur $\vec{q}$ définissant un filigrane numérique et le vecteur $\vec{r}_{RX}$ correspondant audit signal numérique reçu. La norme calculée est de préférence la valeur absolue, mais peut être choisie différente.

La norme ainsi calculée est comparée avec un seuil de détermination $T_{SNR}$. Ce seuil de détermination $T_{SNR}$ permet de vérifier l'orthogonalité entre le vecteur $\vec{r}_{RX}$ correspondant au signal numérique reçu et le ou les vecteurs $\vec{q}$ correspondant chacun à un filigrane numérique.

Le système électronique de réception 2 détermine alors que le vecteur $\vec{r}_{RX}$ correspondant audit signal numérique reçu est orthogonal audit au moins un vecteur $\vec{q}$ définissant un filigrane numérique lorsque ladite norme est inférieure au seuil de détermination $T_{SNR}$ :

$$\left| \vec{q} \cdot \overrightarrow{r_{RX}} \right| \leq T_{SNR}$$

Dans le cas où plusieurs filigranes numériques sont utilisés :

$$\left| \vec{q}_i \cdot \overrightarrow{r_{RX}} \right| \leq T_{SNR}$$

A l'inverse, le système électronique de réception 2 détermine que le vecteur $\vec{r}_{RX}$ correspondant audit signal numérique reçu n'est pas orthogonal audit au moins un vecteur $\vec{q}$ définissant un filigrane numérique lorsque ladite norme est supérieure au seuil de détermination $T_{SNR}$.

En effet, le signal numérique reçu, s'il est authentique, est issu d'un signal numérique résultant d'une projection orthogonale sur un espace vectoriel orthogonal aux filigranes numériques, et, idéalement, les vecteurs correspondant respectivement au signal numérique reçu et à un filigrane numérique sont orthogonaux :

$$\left| \vec{q}^H \cdot \overrightarrow{r_{RX}} \right| = 0$$

En réalité, du fait notamment du bruit introduit par le canal de transmission entre le système électronique d'émission 1 et le système électronique de réception 2, le vecteur $\vec{r}_{RX}$ correspondant au signal numérique reçu n'est pas purement orthogonal à un vecteur $\vec{q}$ définissant un filigrane numérique.

Par conséquent, le seuil de détermination $T_{SNR}$ est choisi afin de ne pas prendre en compte le bruit dans le signal numérique lors du calcul du produit scalaire hermitien. De préférence, le système électronique de réception 2 estime un rapport signal-sur-bruit du signal numérique reçu, à partir duquel le seuil de détermination est fixé.

Le système électronique de réception 2 détermine alors l'authenticité (étape S6) en fonction du résultat de la vérification de l'orthogonalité. Si le signal numérique reçu est déterminé comme orthogonal aux vecteurs définissant chacun un filigrane, alors le signal numérique reçu est considéré comme authentique.

**Revendications**

1. Procédé d'émission d'un signal numérique, s, dans lequel un système électronique d'émission (1) met en oeuvre les étapes selon lesquelles :

   - un vecteur $\vec{s}$ correspondant au signal numérique à transmettre, s, prenant la forme d'une séquence de N symboles est projeté sur un espace vectoriel, ledit espace vectoriel étant orthogonal à au moins un vecteur $\vec{q}$ non nul correspondant à une séquence de symboles définissant un filigrane numérique,
   - le signal numérique résultant de la projection, $r_p$, est émis à destination d'un système électronique de réception (2) apte à authentifier le signal numérique reçu, $r_{RX}$, en vérifiant l'orthogo-

nalité d'un vecteur $\vec{r}_{RX}$, correspondant audit signal numérique reçu, $r_{RX}$, et prenant la forme d'une séquence de symboles, par rapport à au moins le vecteur $\vec{q}$ non nul correspondant à la séquence de symboles définissant le filigrane numérique.

2. Procédé d'émission d'un signal numérique selon la revendication précédente, comprenant en outre une étape selon laquelle, préalablement à sa transmission, le signal numérique résultant de la projection est normalisé de sorte que le produit scalaire hermitien du vecteur $\vec{s}$ correspondant au signal à transmettre avec le vecteur $\vec{r}_{TX}$ correspondant au signal numérique transmis soit égal à N.

3. Procédé selon l'une des revendications précédentes, dans lequel le vecteur $\vec{s}$ correspondant à un signal numérique à transmettre prenant la forme d'une séquence de N symboles est projeté sur un espace vectoriel, ledit espace vectoriel étant orthogonal à une pluralité de K vecteurs $\vec{q}_i$ non nul correspondants chacun à une séquence de symboles définissant un filigrane numérique.

4. Procédé selon la revendication précédente, dans lequel le signal résultant de la projection est déterminé comme étant la première colonne de l'inverse généralisée, dite pseudo-inverse de Penrose, de la matrice M de dimensions (K+1)×N suivante:

$$M = \begin{pmatrix} s(T) & s(2T) & & s(NT) \\ q_1(T) & q_1(2T) & \cdots & q_1(NT) \\ & \vdots & \ddots & \vdots \\ q_K(T) & q_K(2T) & \cdots & q_K(NT) \end{pmatrix}$$

avec T l'intervalle de temps séparant deux symboles consécutifs.

5. Procédé selon l'une des revendications 1 à 4, dans lequel la séquence de symboles définissant ledit au moins un filigrane numérique résulte d'une transformation de symboles du signal numérique à transmettre.

6. Procédé de réception d'un signal numérique, s, dans lequel un système électronique de réception (2) :

- reçoit un signal numérique, $r_p$, émis par un système électronique d'émission (1), ledit signal numérique résultant de la projection d'un vecteur $\vec{s}$ correspondant à un signal numérique à transmettre, s, prenant la forme d'une séquence de N symboles sur un espace vectoriel, ledit espace vectoriel étant orthogonal à au moins un vecteur $\vec{q}$ non nul correspondant à une séquence de symboles définissant un filigrane numérique, et

- authentifie le signal numérique reçu, $r_{RX}$, en vérifiant l'orthogonalité d'un vecteur $\vec{r}_{RX}$, correspondant audit signal numérique reçu et prenant la forme d'une séquence de symboles, par rapport à au moins le vecteur $\vec{q}$ non nul correspondant à la séquence de symboles définissant le filigrane numérique.

7. Procédé de réception selon la revendication précédente, dans lequel, pour vérifier l'orthogonalité, le système électronique de réception (2):

- calcule une norme du produit scalaire hermitien entre ledit au moins un vecteur $\vec{q}$ définissant un filigrane numérique et le vecteur $\vec{r}_{RX}$ correspondant audit signal numérique reçu,
- compare ladite norme avec un seuil de détermination,
- détermine que le vecteur $\vec{r}_{RX}$ correspondant audit signal numérique reçu est orthogonal audit au moins un vecteur $\vec{q}$ définissant un filigrane numérique lorsque ladite norme est inférieure au seuil de détermination, et
- détermine que le vecteur $\vec{r}_{RX}$ correspondant audit signal numérique reçu n'est pas orthogonal audit au moins un vecteur $\vec{q}$ définissant un filigrane numérique lorsque ladite norme est supérieure au seuil de détermination.

8. Procédé de réception selon l'une des revendications 6 ou 7, dans lequel le système électronique de réception (2) authentifie un signal numérique reçu en vérifiant l'orthogonalité d'un vecteur $\vec{r}_{RX}$, correspondant audit signal numérique reçu et prenant la forme d'une séquence de symboles, par rapport à une pluralité K de vecteurs $\vec{q}_i$ non nul correspondants chacun à une séquence de symboles définissant un filigrane numérique.

9. Procédé de réception selon la revendication précédente, comprenant une étape d'estimation du rapport signal-sur-bruit du signal numérique reçu par le système électronique de réception (2), ledit seuil de détermination étant fixé en fonction de ladite estimation.

10. Procédé selon l'une des revendications 6 à 9, dans lequel la séquence de symboles définissant ledit au moins un filigrane numérique résulte d'une transformation de symboles du signal numérique reçu.

11. Procédé selon l'une des revendications précédentes, dans lequel le filigrane numérique est normalisé de sorte que le produit scalaire hermitien du vecteur

$\vec{q}$ correspondant au filigrane numérique avec lui-même soit égal à l'unité.

**12.** Système électronique d'émission (1) comprenant un processeur (12), une mémoire (14) et une chaîne d'émission (16), **caractérisé en ce que** le système électronique de d'émission (1) est configuré pour :

- projeter un vecteur $\vec{s}$ correspondant à un signal numérique à transmettre, s, prenant la forme d'une séquence de N symboles sur un espace vectoriel, ledit espace vectoriel étant orthogonal à au moins un vecteur $\vec{q}$ non nul correspondant à une séquence de symboles définissant un filigrane numérique,
- émettre le signal numérique résultant de la projection, $r_p$, sous la forme d'un signal numérique transmis à destination d'un système électronique de réception (2) apte à authentifier le signal numérique reçu, $r_{RX}$, en vérifiant l'orthogonalité d'un vecteur $\vec{r}_{RX}$, correspondant audit signal numérique reçu et prenant la forme d'une séquence de symboles, par rapport à au moins le vecteur $\vec{q}$ non nul correspondant à la séquence de symboles définissant le filigrane numérique.

**13.** Système électronique de réception (2), comprenant un processeur (22), une mémoire (24) et une chaîne d'acquisition (26), **caractérisé en ce que** le système électronique de réception (2) est configuré pour :

- recevoir un signal numérique émis par un système électronique d'émission (1), $r_p$, ledit signal numérique, $r_p$, résultant de la projection d'un vecteur $\vec{s}$ correspondant à un signal numérique à transmettre, s, prenant la forme d'une séquence de N symboles sur un espace vectoriel, ledit espace vectoriel étant orthogonal à au moins un vecteur $\vec{q}$ non nul correspondant à une séquence de symboles définissant un filigrane numérique, et
- vérifier l'orthogonalité d'un vecteur $\vec{r}_{RX}$ correspondant au signal numérique reçu, $r_{RX}$, avec au moins le vecteur $\vec{q}$ non nul correspondant à la séquence de symboles définissant le filigrane numérique.

**14.** Système électronique de réception (2) selon la revendication précédente, dans lequel, pour vérifier l'orthogonalité, **caractérisé en ce que** le système électronique de réception (2) est configuré pour :

- calculer une norme du produit scalaire hermitien entre ledit au moins un vecteur $\vec{q}$ définissant le filigrane numérique et le vecteur $\vec{r}_{RX}$ correspondant audit signal numérique reçu,

- comparer ladite norme avec un seuil de détermination,
- déterminer que le vecteur $\vec{r}_{RX}$ correspondant audit signal numérique reçu est orthogonal audit au moins un vecteur $\vec{q}$ correspondant au filigrane numérique lorsque ladite norme est inférieure au seuil de détermination, et
- déterminer que le vecteur $\vec{r}_{RX}$ correspondant audit signal numérique reçu n'est pas orthogonal au vecteur $\vec{q}$ correspondant au filigrane numérique lorsque ladite norme est supérieure au seuil de détermination.

**15.** Produit programme d'ordinateur comprenant des instructions de code de programme pour l'exécution des étapes du procédé selon l'une quelconque des revendications 1 à 11, lorsque ledit programme est exécuté par un processeur.

**Patentansprüche**

**1.** Verfahren zum Senden eines digitalen Signals, s, wobei ein elektronisches Sendesystem (1) die Schritte umsetzt, gemäß denen:

- ein dem zu übertragenden digitalen Signal, s, entsprechender Vektor $\vec{s}$, der die Form einer Sequenz von N Symbolen annimmt, auf einen Vektorraum projiziert wird, wobei der Vektorraum zu mindestens einen Vektor $\vec{q}$ von ungleich Null orthogonal ist, welcher einer Symbolsequenz entspricht, die ein digitales Wasserzeichen definiert,
- das aus der Projektion resultierende digitale Signal, $r_p$, an ein elektronisches Empfangssystem (2) gesendet wird, welches in der Lage ist, das empfangene digitale Signal, $r_{RX}$, zu authentifizieren, indem es die Orthogonalität eines Vektors $\vec{r}_{RX}$, der dem empfangenen digitalen Signal, $r_{RX}$, entspricht und die Form einer Symbolsequenz annimmt, in Bezug auf mindestens den Vektor $\vec{q}$ von ungleich Null verifiziert, welcher der Symbolsequenz entspricht, die das digitale Wasserzeichen definiert.

**2.** Verfahren zum Senden eines digitalen Signals nach dem vorstehenden Anspruch, das weiter einen Schritt umfasst, gemäß dem das aus der Projektion resultierende digitale Signal vor seiner Übertragung so normalisiert wird, dass das hermitesche Skalarprodukt aus dem Vektor $\vec{s}$, der dem zu übertragenden Signal entspricht, und dem Vektor $\bar{r}_{TX}$, der dem übertragenen digitalen Signal entspricht, gleich N ist.

**3.** Verfahren nach einem der vorstehenden Ansprüche, wobei der einem zu übertragenden digitalen Signal entsprechende Vektor $\vec{s}$, der die Form einer Sequenz von N Symbolen annimmt, auf einen Vektorraum projiziert wird, wobei der Vektorraum zu einer Vielzahl von K Vektoren $\vec{q_i}$ von ungleich Null orthogonal ist, welche jeder einer Symbolsequenz entsprechen, die ein digitales Wasserzeichen definiert.

4. Verfahren nach dem vorstehenden Anspruch, wobei das aus der Projektion resultierende Signal als die erste Spalte der generalisierten Inversen, Penrose-Pseudoinverse genannt, der folgenden (K+1)×N-dimensionalen Matrix M bestimmt wird:

$$M = \begin{pmatrix} s(T) & s(2T) & \cdots & s(NT) \\ q_1(T) & q_1(2T) & & q_1(NT) \\ & \vdots & \ddots & \vdots \\ q_K(T) & q_K(2T) & \cdots & q_K(NT) \end{pmatrix}$$

wobei T das Zeitintervall ist, das zwei aufeinanderfolgende Symbole trennt.

5. Verfahren nach einem der Ansprüche 1 bis 4, wobei die Symbolsequenz, die das mindestens eine digitale Wasserzeichen definiert, aus einer Transformation von Symbolen des zu übertragenden digitalen Signals resultiert.

6. Verfahren zum Empfangen eines digitalen Signals, s, wobei ein elektronisches Empfangssystem (2):

    - ein digitales Signal, $r_p$, empfängt, das von einem elektronischen Sendesystem (1) gesendet wird, wobei das digitale Signal aus der Projektion eines einem zu übertragenden digitalen Signal, s, entsprechenden Vektors $\vec{s}$, der die Form einer Sequenz von N Symbolen annimmt, auf einen Vektorraum resultiert, wobei der Vektorraum zu mindestens einen Vektor $\vec{q}$ von ungleich Null orthogonal ist, welcher einer Symbolsequenz entspricht, die ein digitales Wasserzeichen definiert, und
    - das empfangene digitale Signal, $r_{RX}$, authentifiziert, indem es die Orthogonalität eines Vektors $\vec{r}_{RX}$, der dem empfangenen digitalen Signal entspricht und die Form einer Symbolsequenz annimmt, in Bezug auf mindestens den Vektor $\vec{q}$ von ungleich Null verifiziert, welcher der Symbolsequenz entspricht, die das digitale Wasserzeichen definiert.

7. Empfangsverfahren nach dem vorstehenden Anspruch, wobei das elektronische Empfangssystem (2), um die Orthogonalität zu verifizieren:

    - eine Norm des hermiteschen Skalarprodukts zwischen dem mindestens einen Vektor $\vec{q}$, der ein digitales Wasserzeichen definiert, und dem Vektor $\vec{r}_{RX}$, der dem empfangenen digitalen Signal entspricht, berechnet,
    - die Norm mit einer Bestimmungsschwelle vergleicht,
    - bestimmt, dass der Vektor $\vec{r}_{RX}$, der dem empfangenen digitalen Signal entspricht, zu dem mindestens einen Vektor $\vec{q}$, der ein digitales Wasserzeichen definiert, orthogonal ist, wenn die Norm kleiner als die Bestimmungsschwelle ist, und
    - bestimmt, dass der Vektor $\vec{r}_{RX}$, der dem empfangenen digitalen Signal entspricht, nicht zu dem mindestens einen Vektor $\vec{q}$, der ein digitales Wasserzeichen definiert, orthogonal ist, wenn die Norm größer als die Bestimmungsschwelle ist.

8. Empfangsverfahren nach einem der Ansprüche 6 oder 7, wobei das elektronische Empfangssystem (2) ein empfangenes digitales Signal authentifiziert, indem es die Orthogonalität eines Vektors $\vec{r}_{RX}$, der dem empfangenen digitalen Signal entspricht und die Form einer Symbolsequenz annimmt, in Bezug auf eine Vielzahl K von Vektoren $\vec{q_i}$ von ungleich Null verifiziert, welche jeder einer Symbolsequenz entsprechen, die ein digitales Wasserzeichen definiert.

9. Empfangsverfahren nach dem vorstehenden Anspruch, das einen Schritt zum Schätzen des Signal-Rausch-Verhältnisses des vom elektronischen Empfangssystem (2) empfangenen digitalen Signals umfasst, wobei die Bestimmungsschwelle in Abhängigkeit von der Schätzung festgelegt wird.

10. Verfahren nach einem der Ansprüche 6 bis 9, wobei die Symbolsequenz, die das mindestens eine digitale Wasserzeichen definiert, aus einer Transformation von Symbolen des empfangenen digitalen Signals resultiert.

11. Verfahren nach einem der vorstehenden Ansprüche, wobei das digitale Wasserzeichen so normalisiert wird, dass das hermitesche Skalarprodukt aus dem Vektor $\vec{q}$, der dem digitalen Wasserzeichen entspricht, mit sich selbst gleich Eins ist.

12. Elektronisches Sendesystem (1), umfassend einen Prozessor (12), einen Speicher (14) und eine Sendekette (16), **dadurch gekennzeichnet, dass** das elektronische Sendesystem (1) dafür konfiguriert ist:

    - einen einem zu übertragenden digitalen Signal, s, entsprechenden Vektor $\vec{s}$, der die Form einer Sequenz von N Symbolen annimmt, auf einen Vektorraum zu projizieren, wobei der Vektorraum zu mindestens einen Vektor $\vec{q}$ von ungleich Null orthogonal ist, welcher einer Symbolsequenz entspricht, die ein digitales Wasserzeichen definiert,
- das aus der Projektion resultierende digitale Signal, $r_p$, in der Form eines übertragenen digitalen Signals an ein elektronisches Empfangssystem (2) zu senden, welches in der Lage ist, das empfangene digitale Signal, $r_{RX}$, zu authentifizieren, indem es die Orthogonalität eines Vektors $\vec{r}_{RX}$, der dem empfangenen digitalen Signal entspricht und die Form einer Symbolsequenz annimmt, in Bezug auf mindestens den Vektor $\vec{q}$ von ungleich Null verifiziert, welcher der Symbolsequenz entspricht, die das digitale Wasserzeichen definiert.

13. Elektronisches Empfangssystem (2), umfassend einen Prozessor (22), einen Speicher (24) und eine Empfangskette (26), **dadurch gekennzeichnet, dass** das elektronische Empfangssystem (2) dafür konfiguriert ist:

- ein von einem elektronischen Sendesystem (1) gesendetes digitales Signal, $r_p$, zu empfangen, wobei das digitale Signal, $r_p$, aus der Projektion eines einem zu übertragenden digitalen Signal, s, entsprechenden Vektors $\vec{s}$, der die Form einer Sequenz von N Symbolen annimmt, auf einen Vektorraum resultiert, wobei der Vektorraum zu mindestens einen Vektor $\vec{q}$ von ungleich Null orthogonal ist, welcher einer Symbolsequenz entspricht, die ein digitales Wasserzeichen definiert, und
- die Orthogonalität eines Vektors $\vec{r}_{RX}$, der dem empfangenen digitalen Signal, $r_{RX}$, entspricht, zu mindestens dem Vektor $\vec{q}$ von ungleich Null zu verifizieren, welcher der Symbolsequenz entspricht, die das digitale Wasserzeichen definiert.

14. Elektronisches Empfangssystem (2) nach dem vorstehenden Anspruch, wobei, um die Orthogonalität zu verifizieren, **dadurch gekennzeichnet, dass** das elektronische Empfangssystem (2) dafür konfiguriert ist:

- eine Norm des hermiteschen Skalarprodukts zwischen dem mindestens einen Vektor $\vec{q}$, der das digitale Wasserzeichen definiert, und dem Vektor $\vec{r}_{RX}$, der dem empfangenen digitalen Signal entspricht, zu berechnen,
- die Norm mit einer Bestimmungsschwelle zu vergleichen,
- zu bestimmen, dass der Vektor $\vec{r}_{RX}$, der dem empfangenen digitalen Signal entspricht, zu dem mindestens einen Vektor $\vec{q}$, der dem digitalen Wasserzeichen entspricht, orthogonal ist, wenn die Norm kleiner als die Bestimmungsschwelle ist, und
- zu bestimmen, dass der Vektor $\vec{r}_{RX}$, der dem empfangenen digitalen Signal entspricht, nicht zu dem Vektor $\vec{q}$, der dem digitalen Wasserzeichen entspricht, orthogonal ist, wenn die Norm größer als die Bestimmungsschwelle ist.

15. Computerprogrammprodukt, das Programmcodeanweisungen für das Ausführen der Schritte des Verfahrens nach einem der Ansprüche 1 bis 11 umfasst, wenn das Programm von einem Prozessor ausgeführt wird.

**Claims**

1. Method for emission of a digital signal, s, wherein an electronic emission system (1) performs the steps according to which:

- a vector $\vec{s}$ corresponding to the digital signal to be transmitted, s, taking the form of a sequence of N symbols is projected onto a vectorial space, said vectorial space being orthogonal to at least one non-zero vector $\vec{q}$ corresponding to a sequence of symbols defining a digital watermark,
- the digital signal resulting from the projection, $r_p$, is sent to an electronic reception system (2) able to authenticate the received digital signal, $r_{RX}$, by verifying the orthogonality of a vector $\vec{r}_{RX}$, corresponding to said received digital signal, $r_{RX}$, and taking the form of a sequence of symbols, relative to at least the non-zero vector $\vec{q}$ corresponding to the sequence of symbols defining the digital watermark.

2. Emission method of a digital signal according to the preceding claim, further comprising a step according to which, prior to its transmission, the digital signal resulting from the projection is normalised such that the hermitian scalar product of the vector $\vec{s}$ corresponding to the signal to be transmitted with the vector $\vec{r}_{TX}$ corresponding to the digital signal transmitted is equal to N.

3. Method according to any one of the preceding claims, wherein the vector $\vec{s}$ corresponding to a digital signal to be transmitted taking the form of a sequence of N symbols is projected onto a vectorial space, said vectorial space being orthogonal to a plurality of K non-zero vectors $\vec{q}_i$ each corresponding to a sequence of symbols defining a digital watermark.

4. Method according to the preceding claim, wherein the signal resulting from the projection is determined as being the first column of the generalised inverse, called Penrose pseudo-inverse, of the following matrix M of dimensions (K+1)×N:

$$M = \begin{pmatrix} s(T) & s(2T) & \cdots & s(NT) \\ q_1(T) & q_1(2T) & \cdots & q_1(NT) \\ \vdots & & \ddots & \vdots \\ q_K(T) & q_K(2T) & \cdots & q_K(NT) \end{pmatrix}$$

with T the time interval separating two consecutive symbols.

5. Method according to any one of claims 1 to 4, wherein the sequence of symbols defining said at least one digital watermark results from a transformation of symbols of the digital signal to be transmitted.

6. Method for reception of a digital signal, s, wherein an electronic reception system (2):

- receives a digital signal, $r_p$, sent by an electronic emission system (1), said digital signal resulting from a projection of a vector $\vec{s}$ corresponding to a digital signal to be transmitted, s, taking the form of a sequence of N symbols onto a vectorial space, said vectorial space being orthogonal to at least one non-zero vector $\vec{q}$ corresponding to a sequence of symbols defining a digital watermark, and
- authenticates a received digital signal by verifying the orthogonality of a vector $\vec{r}_{RX}$, corresponding to said received digital signal, $r_{RX}$, and taking the form of a sequence of symbols, relative to at least the non-zero vector $\vec{q}$ corresponding to the sequence of symbols defining the digital watermark.

7. Reception method according to the preceding claim, wherein, to verify orthogonality, the electronic reception system (2):

- calculates a norm of the hermitian scalar product between said at least one vector $\vec{q}$ defining a digital watermark and the vector $\vec{r}_{RX}$ corresponding to said received digital signal,
- compares said norm to a determination threshold,
- determines that the vector $\vec{r}_{RX}$ corresponding to said received digital signal is orthogonal to said at least one vector $\vec{q}$ defining a digital watermark when said norm is inferior to the determination threshold, and
- determines that the vector $\vec{r}_{RX}$ corresponding to said received digital signal is not orthogonal to said at least one vector $\vec{q}$ defining a digital watermark when said norm is superior to the determination threshold.

8. Reception method according to any one of claims 6 or 7, wherein the electronic reception system (2) authenticates a received digital signal by verifying the orthogonality of a vector $\vec{r}_{RX}$, corresponding to said received digital signal and taking the form of a sequence of symbols, relative to a plurality K of non-zero vectors $\vec{q}_i$ each corresponding to a sequence of symbols defining a digital watermark.

9. Reception method according to the preceding claim, comprising an estimation step of the signal-to-noise ratio of the received digital signal by the electronic reception system (2), said determination threshold being set as a function of said estimation.

10. Method according to any one of claims 6 to 9, wherein the sequence of symbols defining said at least one digital watermark results from a transformation of symbols of the received digital signal.

11. Method according to any one of the preceding claims, wherein the digital watermark is normalised such that the hermitian scalar product of the vector $\vec{q}$ corresponding to the digital watermark with itself is equal to the unit.

12. Electronic emission system (1) comprising a processor (12), a memory (14) and an emission chain (16), **characterised in that** the electronic emission system (1) is configured to:

- project a vector $\vec{s}$ corresponding to a digital signal to be transmitted, s, taking the form of a sequence of N symbols onto a vectorial space, said vectorial space being orthogonal to at least one non-zero vector $\vec{q}$ corresponding to a sequence of symbols defining a digital watermark,
- send the digital signal resulting from the projection, $r_p$, in the form of a digital signal transmitted to an electronic reception system (2) able to authenticate the received digital signal, $r_{RX}$, by verifying the orthogonality of a vector $\vec{r}_{RX}$, corresponding to said received digital signal and taking the form of a sequence of symbols, relative to at least the non-zero vector $\vec{q}$ corresponding to the sequence of symbols defining the digital watermark.

13. Electronic reception system (2), comprising a processor (22), a memory (24) and an acquisition chain (26), **characterised in that** the electronic reception system (2) is configured to:

- receive a digital signal sent by an electronic emission system (1), $r_P$, said digital signal, $r_p$, resulting from a projection of a vector $\vec{s}$ corresponding to a digital signal to be transmitted, s, taking the form of a sequence of N symbols onto a vectorial space, said vectorial space being orthogonal to at least one non-zero vector $\vec{q}$ corresponding to a sequence of symbols defining a digital watermark, and

- verify the orthogonality of a vector $\vec{r}_{RX}$ corresponding to the received digital signal, $r_{RX}$, with at least the non-zero vector $\vec{q}$ corresponding to the sequence of symbols defining the digital watermark.

14. Electronic reception system (2) according to the preceding claim, wherein, to verify orthogonality, **characterised in that** the electronic reception system (2) is configured to:

- calculate a norm of the hermitian scalar product between said at least one vector $\vec{q}$ defining the digital watermark and the vector $\vec{r}_{RX}$ corresponding to said received digital signal,
- compare said norm to a determination threshold,
- determine that the vector $\vec{r}_{RX}$ corresponding to said received digital signal is orthogonal to said at least one vector $\vec{q}$ corresponding to the digital watermark when said norm is inferior to the determination threshold, and
- determine that the vector $\vec{r}_{RX}$ corresponding to said received digital signal is not orthogonal to the vector $\vec{q}$ corresponding to the digital watermark when said norm is superior to the determination threshold.

15. Computer program product comprising program code instructions for execution of the steps of the method according to any one of claims 1 to 11, when said program is run by a processor.

## FIG 1

## FIG 2

| | |
|---|---|
| Acquisition du signal à transmettre | S1 |
| Projection | S1 |
| Emission | S3 |

## FIG 3

| | |
|---|---|
| Acquisition du signal transmis | S4 |
| vérification de l'orthogonalité | S5 |
| Détermination de l'authenticité | S6 |

## RÉFÉRENCES CITÉES DANS LA DESCRIPTION

**Documents brevets cités dans la description**

- US 2003086585 A